# EUROPEAN PATENT APPLICATION

(11) **EP 4 406 792 A1**
(43) Date of publication of application: **31.07.2024**
(21) Application number: 23153919.8
(22) Date of filing: 30.01.2023
(51) Int. Cl.: B60T 8/36, H05K 5/00

(54) **ASSEMBLY FOR A BRAKING SYSTEM FOR A VEHICLE AND METHOD OF ASSEMBLING A MULTILAYER DEVICE**

(71) Applicant: ZF CV Systems Global GmbH, 3006 Bern (CH)
(72) Inventor: AGHA, Samer, 54-104 Wroclaw (PL)
(74) Representative: Ohlendorf, Henrike

(57) **Abstract**

A assembly for a braking system for a vehicle, in particular utility vehicle is provided. The assembly is adapted for holding and fixing at least a first component and a second component, and the assembly comprises a base element and a first clamping element, arranged so that at least one edge area of said first component and/or said second component is clamped by said first clamping element. To improve the fixation and clamping of the internal components, said assembly provides at least a rivet-shaped second clamping element.

## Description

The invention relates to an assembly for a braking system for a vehicle, in particular utility vehicle, wherein the assembly is adapted for holding and fixing at least a first component and a second component, comprising a base element and a first clamping feature, arranged so that at least one edge area of said first component and/or said second component is clamped by said first clamping feature.

Assemblies of the type described above are known and can be used as a housing component for electronics in a control system of a braking system for utility vehicles. The assemblies can also refer throughout the document for over-moulded assemblies. The assembly can be adapted for holding and fixing multiple internal components. According to the state of the art, to ensure proper positioning of the assembled internal components, the assembly has a clamping element, applying all-around edge clamping of the internal components.

However, an insufficient holding effect is observed for the assembled internal components, using this all-around edge clamping geometry of the assembly. This effect is manifested in material separation between the assembly and the edge parts all-around of the internal components.

The invention was therefore based on the object of overcoming the above-mentioned disadvantage as far as possible and enriching the state of the art. In particular, the object of the invention is to further design an assembly for a braking system for a vehicle, in particular utility vehicle, of the type mentioned above in such a way, that the fixation and clamping of internal components in the assembly is improved.

The invention solves the object on which it is based by an assembly for a braking system for a vehicle, in particular utility vehicle, of the type mentioned above with the features of the object of claim 1, as well as the objects according to the further independent claims. In particular, the assembly provides at least a rivet-shaped second clamping element.

According to the invention, an assembly for a braking system for a vehicle, in particular a utility vehicle, is provided. The assembly is adapted for holding and fixing at least a first component and a second component, comprising a base element and a first clamping feature, arranged so that at least one edge area of said first component and/or said second component is clamped by said first clamping feature, wherein the assembly provides at least a rivet-shaped second clamping element.

The invention is based on the realization that the holding effect, in which internal components are fixed and clamped in the assembly by edge clamping, can be improved, when adding an additional clamping element to the geometry of the assembly. The special rivet-shaped geometry of the additional clamping element creates in an advantageous way an opposing surface to the base element on that side of the internal components facing away from the base element. This results in a better holding of the whole inner assembly by increasing the adhesion reactionary forces between the internal components.

The assembly may be used as a housing for electronics in a control system of a braking system for a vehicle, in particular utility vehicle.-In particular, the assembly may be used for an axle valve package of the braking system. It is also conceivable, that the assembly may be used for a trailer control module (TCM). As a housing, the assembly can be adapted for holding and fixing a plurality of components, but at least a first component and a second component, as internal components. These components may represent an inner assembly. The first component may be arranged on top of the base element of the assembly. The second component may be arranged on top of the first component and/or on one side of the first component facing away from the base element of the assembly. Further components, if provided, may be arranged accordingly on top of the second component. "On top" is to be interpreted with respect to a gravity force.

In one or more embodiments of the present invention, the first clamping feature and the rivet-shaped second clamping feature are formed in a single manufacturing step. In particular, the first clamping feature and the rivet-shaped second clamping feature are formed by performing an injection moulding step, wherein the molten material (see below for the information on the material) is formed over the first and second components. In common parlance, the injection moulding step can be referred to as "over-moulding" step, wherein molten material is moulded over a component and is configured to fill the space between the component and an injection moulding tool.

In an advantageous embodiment, the first component, the second component, the first clamping feature and the rivet-shaped second clamping feature are comprised of same material. Despite the fact that the first and second components being made of the same material, after curing, the newly molten material is capable of moulding over the first and second components and holding them together. In particular, said components are held together when the newly molten material moulds over the first and second components.

The present invention, thus, enables the technical advantage in that by designing the first and second components with appropriate moulding and/or tooling provisions such as holes that allow the molten material to pass through, the first and second components are held together by the newly formed clamping features when the molten material solidifies on cooling. Such a technique is particularly advantageous when the sensitive electronic components (e.g., lead frame elements of an electronic circuitry) are to be held between said first and second components, the usage of same material to form the clamping features will prevent usage of external fastening means such as screws. Such external mechanical fasteners may not be desirable in all conditions. Further, by using the same material for the first and second components as well as the clamping features, the present invention also simplifies the assembling process and time expensive analysis on structural rigidity of the assembled structure.

In accordance with one or more embodiments discussed above, the material for making the first clamping feature and the rivet-shaped second clamping feature is Polybutylene Terephthalate (PBT) reinforced with Glass Fibre (GF). It is also preferred when approximately 30 percent of GF is reinforced with PBT to form the first clamping feature and the rivet-shaped second clamping feature. In accordance with an embodiment, the percent of GF usage in combination with PBT for the clamping features can be different in comparison to the percent of GF used in the first and second components.

In a preferred embodiment said second clamping element comprises a shaft part and a head part. The shaft part can extent through the first component and the second component. Said head part is arranged at an end of said shaft part facing away from said base element. In particular, the head part can be arranged on that side of the second component facing away from the first component and the base element. The head part can have a wider diameter compared to the shaft part. In this way, the shaft part and the head part of the second clamping element can help to prevent the first component and the second component from detaching from the assembly.

In another preferred embodiment said second clamping element is located at at least one portion of said base element. In this way, the first component and the second component are also fixed in the approximately center area, but other areas can also be envisaged. At the same time or in an alternative embodiment said first clamping featureis shaped so that said first clamping feature grasps at least said edge area of said first component and said second component. In particular, the first clamping feature can be arranged so that the first clamping feature grasps an edge area all around the first component and the second component. In this way, the first component and the second component are well fixed around the entire outer edge area.

In another preferred embodiment said base element and said first clamping featureand said second clamping element are one-piece formed. At the same time or in an alternative embodiment said shaft part and said head part of said second clamping element are one-piece formed. This allows an easy fabrication of the assembly, comprising the respective elements, in particular by means of an injection assembling process. In addition, this can advantageously increase a stability of the assembly since the individual elements do not have to be subsequently connected to each other.

In another preferred embodiment a plurality of clamping elements are provided, wherein each of the clamping elements is shaped according to said second clamping element. In this way, the holding function of internal components can be further improved. The further clamping elements can be arranged in a distributed manner on the base element of the assembly. In particular, the further clamping elements can be arranged evenly distributed on the base element.

In another preferred embodiment said assembly is set up to accommodate electric leads. The electric leads can be arranged between the first component and the second component. The electrical leads can be used advantageously to conduct electrical current between a pressure sensor and a solenoid valve.

In a further aspect, the invention relates to a braking system, comprising the above-described assembly. The preferred embodiments or variations described for the assembly are also preferred embodiments of the braking system.

In a further aspect, the invention relates to a vehicle, in particular utility vehicle, comprising the above-described assembly. The preferred embodiments or variations described for the assembly are also preferred embodiments of the vehicle, in particular utility vehicle.

In a further aspect, the invention relates to a method of assembling a multilayer device, in which at least a first component and a second component are provided, and in which the above-described assembly is assembled around said first component and said second component. In particular the assembly is assembled around said first component and said second component by means of an injection assembling process. The preferred embodiments or variations described for the assembly are also preferred embodiments of multilayer device. The first component and the second component can be prefabricated components. The first component and the second component can have the appropriate recesses for the rivet-shaped clamping element of the assembly. The first component and the second component can have the appropriate recesses for the number of rivet-shaped clamping elements of the assembly. The assembly can be an injection assembled part. The assembly can be poured in form of liquid plastic in an injection assembly, which temporarily fixes the first and the second component. Thereby the assembly can be assembled around the first component and the second component by means of an injection assembling process. When cooling, the assembly can shrink. This can advantageously create the clamping force to fix the first component and the second component, exerted by the first clamping feature and the second clamping element.

In the following, embodiments of the invention are described in more detail with reference to the attached drawings:
Fig. 1 shows a schematic sectional view of a partial area of an assembly according to the invention; and
Fig. 2 shows a schematic representation of a utility vehicle according to one embodiment of the invention.

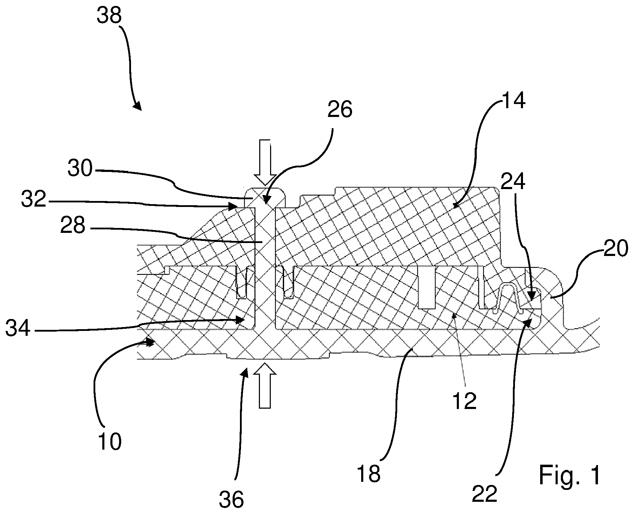

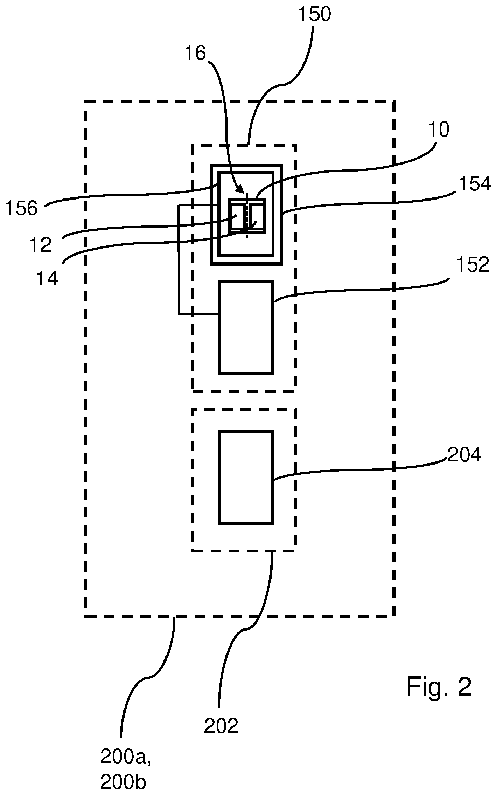

Referring to Fig. 1, a schematic sectional view of a partial area of an assembly 10 for a braking system 150 (Fig. 2) for a vehicle 200a (Fig. 2), in particular utility vehicle 200b (Fig, 2), according to one embodiment of the invention is shown. The vehicle 200a, in particular utility vehicle 200b, is hereinafter referred to as the vehicle 200a, 200b.

The assembly 10 is an injection molded component. In particular, the assembly 10 is assembled from plastic. In the embodiment the assembly 10 is a housing component for electronics in a control system 154 (Fig. 2) of the braking system 150. In particular, the assembly 10 is used for an axle valve package 156 (Fig. 2) of the braking system 150.

The assembly 10 is adapted for holding and fixing a first component 12 and a second component 14. The first component 12 and the second component 14 are prefabricated components in the control system 154 of the braking system 150. Between the first component 12 and the second component 14 electric leads 16 (Fig.2, illustrated schematically by a dashed line) are arranged. The electrical leads 16 are used to conduct electrical current between pressure sensors and solenoids, not shown in the figures, of the axle valve package 152.

The assembly 10 comprises a base element 18. Further, the assembly 10 comprises a first clamping feature 20. The first clamping feature 20 is arranged so that an edge area 22 of the first component 12 is clamped by the first clamping feature 20. In particular, the first clamping feature 20 is arranged so that the first clamping feature 20 grasps an edge area all around the first component 12. Further, the first clamping feature 20 is arranged so that an edge area 24 of the second component 14 is clamped by the first clamping feature20. In particular, the first clamping feature 20 is arranged so that the first clamping feature 20 grasps an edge area all around the second component 14.

Further, the assembly 10 provides a second clamping element 26. The second clamping element 26 is rivet shaped. The second clamping element 26 comprises a shaft part 28. Further, the second clamping element 26 comprises and a head part 30. The head part 30 is arranged at a first end 32 of the shaft part 28, facing away from the base element 18. A second end 34 of the shaft part 28, facing away from the first end 32, is facing the base element 18. In the embodiment, the second clamping element 26 is located at at least one portion marked with reference sign "36" in Fig. 1 of the base element 18.

In the embodiment, the base element 18, the first clamping feature 20 and the second clamping element 26 are one-piece formed. Further, in the embodiment, the shaft part 28 and the head part 30 of the second clamping element 26 are one-piece formed.

The assembly 10, the first component 12 and the second component 14 form a multilayer device 38. The following describes how to assemble the multilayer device 38:
The first component 12 and the second component 14 are provided as prefabricated components. Both, the first component 12 and the second component 14 have the appropriate recess for the shaft 28 of the rivet-shaped second clamping element 26 of the assembly 10. The first component 12 and the second component 14 are temporarily fixed in an injection assembly. The assembly 10, at this time in form of liquid plastic, is poured in the injection assembly, and thereby assembled around the first component 12 and the second component 14 by means of an injection assembling process. Accordingly, the assembly 10 is manufactured later than first component 12 and the second component 14. When cooling, the assembly 10 shrinks. This creates a clamping force to fix the first component 12 and the second component 14, exerted by the first and the second clamping elements 20, 26.

Referring to Fig. 2, a schematic representation of a vehicle 200a, in particular utility vehicle 200b, according to one embodiment of the invention is shown. The vehicle 200a, in particular utility vehicle 200b, is hereinafter referred to as the vehicle 200a, 200b. The illustration is limited to the components essential to the invention. The vehicle 200a, 200b has, in addition to the components illustrated, further components necessary for the operation of the vehicle 200a, 200b. The illustration of such components has been omitted in favor of a concise presentation of the invention.

The vehicle 200a, 200b comprises a drive system 202. In the present embodiment, the drive system 202 has one or more electric drives 204. The one or more electric drives 204 are configured to drive the vehicle 200a, 200b.

Further, the vehicle 200a, 200b comprises a braking system 150. The braking system 150 comprises is brake 152, configured to delay a movement of the vehicle 200a, 200b. Further the braking system 150 comprises a control system 154, to control the brake 152. The control system 154 comprises an assembly 10, designed according to one of the preferred embodiments or embodiment forms described above.

### List of reference signs (part of the description)

- 10: assembly
- 12: first component
- 14: second component
- 16: electric leads
- 18: base element
- 20: first clamping feature
- 22: edge area of the first component
- 24: edge area of the second component
- 26: second clamping element
- 28: shaft
- 30: head part
- 32: first end of the shaft part
- 34: second end of the shaft part
- 36: center of the base
- 38: multilayer device

- 150: braking system
- 152: brake
- 154: control system
- 156: axle valve package

- 200a: vehicle
- 200b: utility vehicle
- 202: drive system
- 204: electric drive

## Claims

1. Assembly (10) for a braking system (150) for a vehicle (200a), in particular utility vehicle (200b), the assembly (10) is adapted for holding and fixing at least a first component (12) and a second component (14), comprising a base element (18) and a first clamping feature (20), arranged so that at least one edge area (22, 24) of said first component (12) and/or said second component (14) is clamped by said first clamping element (20), wherein said assembly (10) provides at least a rivet-shaped second clamping feature (26).

2. Assembly (10) according to claim 1, wherein the first clamping feature (20) and the rivet-shaped second clamping feature (26) are formed in a single manufacturing step.

3. Assembly (10) according to claim 1 or claim 2, wherein the first component, the second component, the first clamping feature and the rivet-shaped second clamping feature are comprised of same material.

4. Assembly (10) according to claim 3, wherein the material for making the first clamping feature and the rivet-shaped second clamping feature is Polybutylene Terephthalate (PBT) reinforced with Glass Fibre (GF).

5. Assembly (10) according to any one of the above claims, wherein said second clamping feature (26) comprises a shaft part (28) and a head part (30), wherein said head part (30) is arranged at an end (32) of said shaft part (28) facing away from said base element (18).

6. Assembly (10) according to any one of the above claims, wherein said second clamping feature (26) is located at at least one portion (36) of said base element (18) and/or said first clamping feature (20) is shaped so that said first clamping feature (12) grasps at least said edge area (22, 24) of said first component (12) and/or said second component (14).

7. Assembly (10) according to any of the above claims, wherein said base element (18) and said first clamping feature (20) and said second clamping element (26) are integrally formed and/or wherein said shaft part (28) and said head part (30) of said second clamping element (26) are integrally formed.

8. Assembly (10) according to any of the above claims, wherein a plurality of clamping features are provided, wherein each of the clamping features is shaped according to said second clamping feature (26).

9. Assembly (10) according to any of the above claims, wherein said assembly (10) is set up to accommodate electric leads (16).

10. Braking system (150), comprising a assembly (10) according to any of the claims 1 to 9.

11. Vehicle (200a), in particular utility vehicle (200b), comprising a assembly (10) according to any of the claims 1 to 9.

12. Method of assembling a multilayer device (38), in which at least a first component (12) and a second component (14) are provided, wherein the assembly (10) according to any of the claims 1 to 9 is assembled around said first component (12) and said second component (14), in particular by means of an injection assembling process.
